# EUROPÄISCHE PATENTSCHRIFT

(11) **EP 3 766 010 B1**
(45) Veröffentlichungstag und Bekanntmachung des Hinweises auf die Patenterteilung: **18.09.2024**
(21) Anmeldenummer: 19711278.2
(22) Anmeldetag: 11.03.2019
(51) Int. Cl.: G06K 15/02, B41J 2/475

(54) **VORRICHTUNG UND VERFAHREN ZUM BEDRUCKEN EINES DATENTRÄGERS**
DEVICE AND METHOD FOR IMPRINTING A DATA CARRIER
DISPOSITIF ET PROCÉDÉ D'IMPRESSION D'UN SUPPORT DE DONNÉES

(30) Priorität: 15.03.2018 DE 102018002113
(43) Veröffentlichungstag der Anmeldung: 20.01.2021
(73) Patentinhaber: MB Automation GmbH & Co. KG, 93426 Roding (DE)
(72) Erfinder: HOECHERL, Franz, 94372 Rattiszell (DE)
(74) Vertreter: Schmidt, Steffen J.
(86) Internationale Anmeldenummer: PCT/EP2019/055988
(87) Internationale Veröffentlichungsnummer: WO 2019/175089

(56) Entgegenhaltungen:
- EP-A2- 3 028 861
- WO-A1-98/51507
- US-A1- 2007 245 916
- US-A1- 2014 063 086
- US-A1- 2017 225 500

## Beschreibung

### Hintergrund

Hier werden eine Vorrichtung und ein Verfahren zum Bedrucken eines Datenträgers offenbart. Insbesondere wird damit ein zu bedruckender Bereich des Datenträgers mit personenbezogenen Daten mittels zum Beispiel eines Tintenstrahldruckers bedruckt. Aspekte der Vorrichtung und des Verfahrens sind sowohl in der Beschreibung, als auch in den Figuren und den Ansprüchen definiert.

Datenträger der hier angesprochenen Art sind Sicherheits- oder Identifikationsdokumente wie Reisepässe, Personalausweise, Führerscheine, Ausweiskarten, Kreditkarten, Bankkarten, Barzahlungskarten, Etiketten, Zutrittsausweise, und dergleichen.

Die als Sicherheits- oder Identifikationsdokumente zum Einsatz kommenden Datenträger der hier vorgestellten Art werden in der Regel bis auf ihre Personalisierungsdaten zentral gefertigt und anschließend dezentral, zum Beispiel auf Meldestellen, bei Behörden oder in zur Ausstellung derartiger Dokumente berechtigten Unternehmen mit einer Personalisierung versehen. Bei der Personalisierung werden den jeweiligen Inhaber des Sicherheits- oder Identifikationsdokuments individuell bezeichnende Personalisierungsdaten in Form von Text-, Zahlen- und/oder Bilddaten (zum Beispiel Name und Anschrift des Inhabers, Geburtsdatum, Geburtsort, Foto des Inhabers, biometrische Daten des Inhabers, etc.), sowie Ausstellungsort, -datum und Gültigkeitsdauer des Dokuments in das Sicherheits- oder Identifikationsdokument eingebracht. Diese Text-, Zahlen- und/oder Bilddaten sind zumindest teilweise von einem Betrachter unmittelbar lesbar.

Obwohl die Fertigung des Datenträgers und die Einbringung der individuellen Benutzerdaten einfach und kostengünstig sein sollen, besteht die Anforderung, dass die Karten mit optimalem Schutz gegen Fälschung und Verfälschung ausgestaltet sein sollen.

Im Übrigen soll der Druckvorgang ein Druckerzeugnis liefern, das gegen Gebrauchseinflüsse sehr beständig ist.

### Stand der Technik

Verfahren und Vorrichtungen zum Bedrucken von Datenträgern mit Druckköpfen und relativ zu den Druckköpfen beweglichen Datenträgern werden durch die Dokumente US 2017/225500 A1, US 2014/063086 A1, WO 98/51507 A1 und WO 2017/120108 A1 offenbart.

Weiterer technologischer Hintergrund wird durch das Dokument WO 2017 120108 A1 offenbart.

### Technisches Problem

Ausgehend von dieser Situation soll eine einfache, kostengünstige und robuste Anordnung und Vorgehensweise zum Bedrucken eines Datenträgers, etwa eines Reisepasses, bereitgestellt werden.

### Vorgeschlagene Lösung

Zur Lösung dieses Problems werden Vorrichtungen oder Verfahren mit den Merkmalen bzw. Schritten der unabhängigen Ansprüche vorgeschlagen.

Insbesondere wird ein Verfahren zum Bedrucken eines Datenträgers mit den Schritten vorgeschlagen: Eintragen des Datenträgers mit freiliegendem zu bedruckendem Bereich in einen Drucker, wobei dem Drucker ein Druckerkopf mit zwei oder mehr auf den Datenträger zu druckenden Tinten, und eine von dem Druckerkopf räumlich abgesetzte Aushärtestation zugeordnet ist; Bewegen des Datenträgers relativ zu dem Druckerkopf, so dass der Druckerkopf einen zu bedruckenden Bereich des Datenträgers zu bedrucken in der Lage ist; Bedrucken des zu bedruckenden Bereiches des Datenträgers mit personenbezogenen Daten unter Verwendung wenigstens einer ersten der Tinten; Bewegen des Datenträgers relativ zu der Aushärtestation in einer ersten Richtung, nachdem der Datenträger mit der wenigstens einen ersten Tinte bedruckt ist, so dass die Aushärtestation auf den zu bedruckenden Bereich des Datenträgers einzuwirken in der Lage ist; zumindest teilweises Antrocknen der wenigstens einen ersten Tinte in dem zu bedruckenden Bereich des Datenträgers in der Aushärtestation; Bewegen des Datenträgers relativ zu dem Druckerkopf in einer zweiten, zur ersten entgegengesetzten Richtung, so dass der Druckerkopf einen zu bedruckenden Bereich des Datenträgers zu bedrucken in der Lage ist; Bedrucken des zu bedruckenden Bereiches des Datenträgers unter Verwendung wenigstens einer zweiten der Tinten, wobei sich vorzugsweise der Aufdruck unter Verwendung wenigstens einer zweiten der Tinten vom Aufdruck unter Verwendung wenigstens einer ersten der Tinten unterscheidet; Austragen des Datenträgers aus dem Drucker.

Ein weiterer Aspekt betrifft eine Vorrichtung zum Bedrucken eines Datenträgers mit: einem Druckereingang, der dazu eingerichtet und dimensioniert ist, einen Datenträger mit freiliegendem zu bedruckendem Bereich aufzunehmen; einem Druckerkopf, der dazu eingerichtet ist, zwei oder mehr zu druckende Tinten auf den freiliegenden zu bedruckenden Bereich des Datenträgers gesteuert auszudrucken; und einer Aushärtestation, die von dem Druckerkopf räumlich abgesetzt ist; einer Fördereinrichtung, die dazu eingerichtet und dimensioniert ist, den Datenträger, den Druckerkopf und die Aushärtestation relativ zueinander zu bewegen, so dass der Druckerkopf den zu bedruckenden Bereich des Datenträgers zu bedrucken in der Lage ist, und die Aushärtestation auf den bedruckten Bereich des Datenträgers einzuwirken in der Lage ist; einer Steuereinrichtung, die dazu eingerichtet und programmiert ist, die Fördereinrichtung zum Bewegen des Datenträgers relativ zu dem Druckerkopf zu veranlassen, so dass der Druckerkopf den zu bedruckenden Bereich des Datenträgers zu bedrucken in der Lage ist; den Druckerkopf zum Bedrucken des zu bedruckenden Bereiches des Datenträgers mit personenbezogenen Daten unter Verwendung wenigstens einer ersten der Tinten zu veranlassen; die Fördereinrichtung zum Bewegen des Datenträgers relativ zu der Aushärtestation in einer ersten Richtung zu veranlassen, nachdem der Datenträger mit der wenigstens einen ersten Tinte bedruckt ist, so dass die Aushärtestation auf den zu bedruckenden Bereich des Datenträgers einzuwirken in der Lage ist; die Aushärtestation zum zumindest teilweisen Antrocknen der wenigstens einen ersten Tinte in dem zu bedruckenden Bereich des Datenträgers zu veranlassen; die Fördereinrichtung zum Bewegen des Datenträgers relativ zu dem Druckerkopf in einer zweiten, zur ersten entgegengesetzten Richtung zu veranlassen, so dass der Druckerkopf den zu bedruckenden Bereich des Datenträgers zu bedrucken in der Lage ist; den Druckerkopf zum Bedrucken des zu bedruckenden Bereiches des Datenträgers unter Verwendung wenigstens einer zweiten der Tinten zu veranlassen, wobei sich vorzugsweise der Aufdruck unter Verwendung wenigstens einer zweiten der Tinten vom Aufdruck unter Verwendung wenigstens einer ersten der Tinten unterscheidet; und die Fördereinrichtung zum Austragen des Datenträgers aus dem Drucker zu veranlassen.

Hier sind Abmessungen / Formen / Lagen von Vorrichtungsteilen (z.B. Datenträger-Aufnahme, -Abdeckung, Rahmen) auch auf Größen / korrespondierende Formen des Datenträgers bezogen. Obwohl der Datenträger nicht Teil der Vorrichtung ist, stehen seine Dimensionen und Formen mit der Vorrichtung bei deren Dimensionierung und Gestalt sowie der Verwendung der Vorrichtung in Beziehung. Ein Datenträger der hier in Rede stehenden Art ist in seiner Form, Größe, oder Ausstattung in gewissem Maß standardisiert, da es sich um ein Sicherheits- oder Identifikationsdokument wie Reisepass oder Passbuch, Personalausweis, Führerschein, Ausweiskarte, Kreditkarte, Bankkarte, Barzahlungskarte, Etikette, Zutrittsausweis etc. handelt.

So können Datenträger zum Beispiel das Kreditkartenformat (ID-1) haben, welches für die Karte eine Länge von 85,60 Millimeter und eine Breite von 53,98 Millimeter vorsieht (3,370 mal 2,125 Zoll). Dieses Format wird für Kreditkarten, Telefonkarten, Kreditkarten, Bankkarten, Barzahlungskarten seit Jahrzehnten verwendet. Auch Führerscheine und Identitätsausweise haben in vielen Ländern ID-1-Größe.

Datenträger können zum Beispiel auch das Personalausweisformat (ID-2) haben, welches für die Karte eine Größe von 105 Millimeter mal 74 Millimeter (4,125 mal 2,875 Zoll) vorsieht. Dies entspricht dem Format DIN A7. Im Vergleich zu ID-1 bietet ID-2 etwas mehr Platz, der sich für ein größeres Passfoto oder für zusätzliche physikalische Sicherheitsmerkmale nutzen lässt.

Datenträger können insbesondere auch das Reisepassformat (ID-3) mit einer Größe von 125 Millimeter mal 88 Millimeter haben (4,875 mal 3,5 Zoll), also dem Format DIN B7 entsprechen, welches weltweit die Größe von Reisepässen bestimmt.

Die Datenseite eines Reisepasses ist in zwei Bereiche aufgeteilt: die visuelle Zone und die maschinenlesbare Zone. Die maschinenlesbare Zone hat zwei Buchstabenreihen in der maschinenlesbaren Schrift OCR-B. In der visuellen Zone sind die Personendaten des Inhabers sowie ein Passfoto abgebildet. In der maschinenlesbaren Zone sind die wichtigsten dieser Daten wiederholt.

Aber auch Datenträger, die keiner oder geringerer Standardisierung unterliegen, sind hier klar einbezogen, da sich die aus der der Form, Größe, oder Ausstattung des Datenträgers ergebenden Einschränkungen für die Vorrichtung unmittelbar ergeben, so dass in der Definition der Vorrichtung oder des Verfahrens die genauen Abmessungen oder Ausstattung des Datenträgers nicht enthalten sein müssen. Auch eine Definition einer expliziten Kombination aus Datenträger und Vorrichtung ist hier nicht erforderlich.

Bei dem hier eingesetzten UV-Druckverfahren (UV = Ultraviolett) werden sogenannte UV-reaktive oder UV-härtende Tinten als Druckfarben und eine UV-Strahlungsquelle zum Aushärten des Druckbildes in der Aushärtestation eingesetzt.

Als Bindemittel können die hier verwendeten Tinten zum Beispiel eine Mischung aus Acrylatmonomeren, Oligomeren und Fotoinitiatoren enthalten. Darüber hinaus können die hier verwendeten UV-Tinten frei von Lösemitteln und Verdünnern sein.

Wenn in der Aushärtestation UV-Strahlen auf die Fotoinitiatoren einwirken, wird in dem Bindemittel der Tinten eine Polymerisation ausgelöst. Dies führt zu einer chemischen Aushärtungsreation und einer Fixierung der frisch aufgetragenen Tinten auf dem Datenträger.

Durch diesen Vorgang liegt eine Tintenschicht auf dem Datenträger und die Farben der Tinte dringen nicht in die in der Regel aus Kunststoff gebildete Datenseite des Datenträgers ein. Ähnliches gilt für vergütetes (lackiertes oder beschichtetes) Papier, aus dem in der Regel die der Datenseite gegenüberliegende Seite gebildet ist. Bei einfachem Papier kann die Tintenschicht evtl. eindringen.

Der Einsatz von durch UV-Licht aushärtbaren UV-reaktiven Tinten erlaubt hohe Produktionsgeschwindigkeiten mit hohen Farbqualitäten, auch im hellen Bereich des Farbraums zu erreichen. Damit sind auch Drucke der Passbilder in fotorealistischer Bildqualität möglich.

Diese UV-reaktiven Tinten sind zu unterscheiden von der ebenfalls hier als Tinte einzusetzenden fluoreszierenden UV-Tinte, die ebenfalls in der hier beschriebenen Weise durch UV-Licht auszuhärten sein kann, aber im späteren Gebrauch des Datenträgers nur unter UV-Licht sichtbar ist.

Die hier vorgestellten Varianten sind effizient, raumsparend und bieten einen hohen Durchsatz an bedruckten Datenträgern. Außerdem eignen sich die hier vorgestellten Varianten zur effizienten Einbindung in Produktionsabläufe.

Hier wird eine kompakte Maschine bei überschaubaren Kosten geschaffen, die mit einem einzigen Drucker einen überlappenden Druck erzeugt und den ersten Druck vor dem zweiten Druck antrocknet. Dazu wird der Pass auf dem gleichen Weg zurücktransportiert und erneut überlappend mit dem vorherigen Druck bedruckt.

Das hier vorgestellte Verfahren benötigt nur einen Drucker. Gegebenenfalls kann das Trocknen der Tinte nach dem ersten und dem zweiten Druckvorgang in separaten Trockenstationen oder in einer Trockenstation ausgeführt werden. Als Drucker kann ein Tintenstrahldrucker, insbesondere ein Drop-on-Demand Tintenstrahldrucker verwendet werden.

Ein Passbuch ist mit einem farbigen, UV-härtenden Tintenstrahldruck-Gesichtsbild zum Beispiel im CMYK-Farbraum zu bedrucken; überlappend mit diesem Druck kann anschließend ein separater UV-Druck aufgedruckt werden. "Überlappend" kann in diesem Zusammenhang heißen, dass sich die aufgedruckten Tintenbereiche zumindest teilweise überdecken. Dies kann nicht in einem Schritt geschehen, da sonst der nasse CMYK- und die UV-aktive Tinten des Tintenstrahldrucks verwischen.

Aus einem in der Höhe verstellbarem Magazin werden die bereits geöffneten Passbüchen in einzelnen Fächern übereinander bereitgehalten. Alternativ können ein Magazin und ein Umblättermodul zum Öffnen des Passbuches an der zu bedruckenden Seite vorgesehen sein. Anschließend durchläuft der elektronische Reisepass mehrere Prozessmodule, zum Beispiel eine MRTD-Programmierstation (MRTD = Machine Readable Travel Document) zur Chip-Codierung, und eine Laserbeschriftungsstation, welcher ein separater nicht transportierbarer Schlitten zugeordnet sein kann, um den Reisepass für die Dauer der Beschriftung mit Laser zu klemmen. Nach Beendigung der Beschriftung der Datenseite mit Laser wird der Reisepass durch einen dem nicht transportierbaren Schlitten zugeordneten Antrieb, welcher unterhalb des nicht transportierbaren Schlittens angeordnet sein kann, aus dem Schlitten gefördert und an wenigstens eine in einem Übergabeabschnitt zwischen dem nicht transportierbarem Schlitten und dem transportierbarem Schlitten befindliche Antriebsrolle übergeben. Von der Antriebsrolle im Übergabeabschnitt wird der Reisepass anschließend an einen dem transportierbaren Schlitten zugordneten Antrieb übergeben, um den Reisepass im Schlitten aufzunehmen. Der elektronische Reisepass wird in dem transportierbaren Schlitten noch vor dem ersten Druckvorgang / dem Druckerkopf im geöffneten Zustand geklemmt und einer Kamera zugeführt. Die Naht des Passbuchs ist längs der Transportrichtung orientiert. Damit ist der Druckbereich mit der kurzen Kante der Datenseite schmäler. Darüber hinaus sind die Datenseite und die Vorderseite des Passes an derselben Stelle, wenn der Schlitten das Passbuch unter der Laserstation um 180 Grad wendet.

Ein Schlitten ist in Längsrichtung verfahrbar durch einen Einzug mit Förderrollen, zwischen denen der Pass transportiert wird. Der Schlitten kann die verschiedenen Dicken der beiden Passhälften kompensieren, indem im Schlitten für jede Passhälfte gefederte Auflageelemente oder Niederhalter vorgesehen sind.

Bei der Bewegung des Passbuches in Transportrichtung werden die Niederhalter aktiviert, indem das Passbuch geklemmt wird. Beim Ausgeben des Passbuches nach der Aushärtestation die Niederhalter entsprechend geöffnet werden. Im Transportabschnitt der Ausgabe dient eine Antriebsrollenpaaar zum Fördern des Passbuches aus dem Schlitten.

Die Position des Passes wird anhand der Legende auf der Datenseite, anderen Vordrucken/ Sicherheitselementen oder anhand von nicht durch die Niederhalter verdeckten Kantenabschnitten des Passbuches erfasst. Abhängig davon erhält der Druckerkopf die Druckdaten für das CMYK-Bild und Positions-Korrekturwerte. Das Vermessen des Passes ist optional.

Das Passbuch wird kontinuierlich unter dem in zumindest einer Variante nicht beweglichen Drucker hindurchbewegt, dabei bedruckt und mit einer nachgeordneten, leistungsregelbaren Aushärtestation mit UV-LEDs nur angetrocknet. Dieses Aushärten wird für eine einstellbare Dauer ausgeführt, wenn der Schlitten zum Beispiel einen Sensor passiert. Wesentlich ist dabei, dass die Zeitdauer des Antrocknens so festgelegt ist, dass das Antrocknen nur teilweise geschieht, wodurch klare Grenzlinien zwischen den Tinten vermieden und die Haftung der Tinten aneinander verbessert wird. Bei vollständiger Trocknung wird keine zuverlässige Verbindung der beiden Drucke (CMYK-Druckbild und UV-aktiver Druck) erreicht.

Beim nachfolgenden Rücktransport des Passbuches in dem Schlitten unter den Druckerkopf wird, sofern ein Sensor vorhanden ist, die Lage und Orientierung des Passbuches in dem Schlitten relativ zu dem Druckerkopf erneut vermessen. Basierend auf den erhaltenen Lage- und Orientierungsdaten erhält der Druckerkopf die Druckdaten für das überlappend zu druckende UV-Bild, getrennt von den CMYK-Druckdaten. Damit ist erreichbar, dass auch Fehler im µm-Bereich, bedingt durch evtl. Verrutschen des Passes oder ungenauen Druck der ersten Tinte, ausgeglichen werden können. Optional kann zugleich auch eine Qualitätskontrolle des zuvor gedruckten CMYK-Bildes erfolgen.

Das Passbuch in dem Schlitten wird erneut unter dem Druckerkopf hindurchbewegt und ein überlappender Druck mit UV-aktiver Tinte wird auf dem vorherigen Druck mit der CMYK-Tinte erzeugt, z.B. ein QR-Code, Gesichtsbild, Wappen, Kodiertes Zeichen, welches eine elektronisch oder grafisch in oder auf dem Pass gespeicherte Information enthält, etc.

Anschließend wird das Passbuch in dem Schlitten erneut unter die Aushärtestation gefördert und mit UV-Lichtstrahlen ausgehärtet oder vollständig getrocknet.

Insbesondere kann folgender Ablauf vorgesehen sein, und zwar vorzugsweise in der angegebenen Reihenfolge:
- Bewegen des Passbuchs bzw. des Datenträgers relativ zu dem Druckerkopf in die erste Richtung und Bedrucken des zu bedruckenden Bereichs des Datenträgers mit personenbezogenen Daten unter Verwendung wenigstens einer ersten der Tinten.
- Bewegen des Datenträgers relativ zu der Aushärtestation in der ersten Richtung und zumindest teilweises Antrocknen der wenigstens einen ersten Tinte.
- Bewegen des Datenträgers in die, der ersten Richtung entgegengesetzten, zweite Richtung.
- Bewegen des Datenträgers relativ zu dem Druckerkopf in die erste Richtung und Bedrucken des zu bedruckenden Bereichs des Datenträgers unter Verwendung wenigstens einer zweiten der Tinten.
- Bewegen des Datenträgers relativ zu der Aushärtestation in der ersten Richtung und zumindest teilweises Antrocknen der wenigstens einen zweiten Tinte.

Auf diese Weise ist ermöglicht, dass das Bedrucken des Datenträgers mit einer Tinte und das anschließende Antrocknen der Tinte in der Aushärtestation erfolgt, während der Datenträger - ausgehend von einer Druck-Startposition - lediglich in die erste Richtung bewegt wird, also innerhalb eines "Hin-Transports" des Datenträgers. Anschließend wird der Datenträger in die zweite Richtung zurücktransportiert, es erfolgt also ein Rücktransport des Datenträgers, bis er sich wieder in der Druck-Startposition befindet. Dieser Vorgang kann dann für jeden Druck wiederholt werden, so dass ein Druck pro Hin-Transport des Datenträgers erfolgt.

Alternativ kann beispielsweise folgender Ablauf vorgesehen sein, und zwar vorzugsweise in der angegebenen Reihenfolge:
- Bewegen des Datenträgers relativ zu dem Druckerkopf in die erste Richtung und Bedrucken des zu bedruckenden Bereichs des Datenträgers mit personenbezogenen Daten unter Verwendung wenigstens einer ersten der Tinten.
- Bewegen des Datenträgers relativ zu der Aushärtestation in der ersten Richtung und zumindest teilweises Antrocknen der wenigstens einen ersten Tinte.
- Bewegen des Datenträgers relativ zu dem Druckerkopf in die zweite Richtung und Bedrucken des zu bedruckenden Bereichs des Datenträgers unter Verwendung wenigstens einer zweiten der Tinten.
- Auf diese Weise ist ermöglicht, dass der Datenträger sowohl auf dem Hin-Transport, als auch auf dem Rücktransport mit einem Druck versehen wird.
- Zum Antrocknen des zweiten Drucks kann der Datenträger dann wieder in die erste Richtung bewegt werden.

Es kann hierbei auch vorteilhaft vorgesehen sein, dass die Vorrichtung außerdem eine weitere Aushärtestation aufweist, die so angeordnet ist, dass sich der Druckerkopf zwischen der zuerst genannten Aushärtestation und der weiteren Aushärtestation befindet. Dann kann der zweite Druck vorteilhaft angetrocknet werden, während der Datenträger noch in die zweite Richtung bewegt wird. Ein dritter Druck und ein Antrocknen des dritten Drucks können dann während des nächsten Hin-Transports erfolgen.

Die Bewegung des Datenträgers in die erste Richtung und die Bewegung des Datenträgers in die zweite Richtung erfolgen vorzugsweise auf demselben Weg.

In einer Variante, insbesondere wenn das Passbuch kontinuierlich unter dem Drucker hindurchbewegt wird, wird der Druckerkopf nicht bewegt; er überdeckt stattdessen die gesamte Breite des Druckbereichs ab, der nicht von den Niederhaltern verdeckt wird. Der Druckerkopf kann weitere UV-Farben oder einen transparenten, UV-Lichthärtenden Lack enthalten, um in einem weiteren Durchlauf das gesamte Bild auf der Oberfläche des Datenträgers zu versiegeln. Zum Versiegeln kann das bisherige Druckbild teilweise oder komplett getrocknet, und das Passbuch in dem Schlitten erneut zu dem Druckerkopf zurücktransportiert werden.

Der Druckerkopf kann relativ zu dem Passbuch in dem Schlitten auch um 90 Grad gedreht ausgerichtet sein; der Buchrücken kann dann quer zur Transportrichtung orientiert sein. In diesem Fall kann der Druckerkopf einen Antrieb für die Bewegung quer zur Passbuch-Transportrichtung haben.

Der Druckerkopf kann auch einen Antrieb haben und quer zur Passbuch-Transportrichtung entlang einer Führungsschiene positioniert sein. Der Druckerkopf kann in einer anderen Variante auch seitlich über den Schlitten oder die Fördereinrichtung hinaus bewegt werden, um dort auch die selben oder davon verschiedene Daten wie auf der Datenseite (auf ein Protokoll) zu drucken. Er kann seitlich über den Schlitten hinaus bewegt werden, um in Intervallen eine Auto-Reinigung der Druckerdüsen durchzuführen, zum Beispiel mit Vakuum oder Druckluft, welche in den Tintenkanal der Düse nach dem Tintenreservoir mündet, und/oder durch einen Abstreifer, der an den Druckerdüsen vorbeibewegt wird oder an dem die Druckerdüsen vorbeibewegt werden.

Weitere vorteilhafte Ausführungen der Vorrichtungen und der Verfahrensweisen ergeben sich aus den Unteransprüchen.

### Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen.

Hierbei zeigen:
- Fig. 1a: in einer schematischen Darstellung einen Datenträger der durch eine hier offenbarte Vorrichtung verarbeitbaren Art in Gestalt eines Passbuches von außen;
- Fig. 1b: in einer schematischen Darstellung einen Datenträger der durch eine hier offenbarte Vorrichtung verarbeitbaren Art in Gestalt der im Innern des Passbuches von Fig. 1a befindlichen Datenseite;
- Fig. 2a: in einer schematischen seitlichen Darstellung eine Vorrichtung zum Bedrucken eines Datenträgers nach Fig. 1a, 1b mit personenbezogenen Daten mittels eines Tintenstrahldruckers.
- Fig. 2b: die Vorrichtung zum Bedrucken des Datenträgers nach Fig. 2a in einer schematischen Draufsicht.

### Detaillierte Beschreibung von Varianten der Vorrichtungen und der Verfahrensweisen

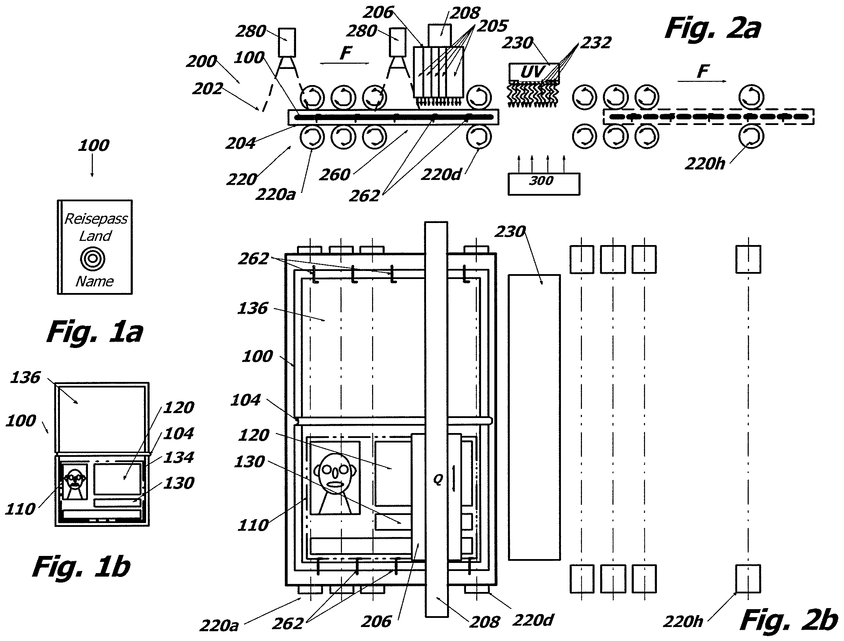

Fig. 1a zeigt einen Datenträger 100 in Gestalt eines Passbuches im ID-3-Reisepassformat von außen, und Fig. 1b zeigt von dem Datenträger 100 in der Variante des Passbuches aus der Fig. 1a die im Innern des Passbuches befindliche Datenseite 134. Insbesondere sind hier ein Foto-Bildfeld 110 und ein Datenfeld 120 sowie einen Informationsflächenbereich 130 veranschaulicht.

Fig. 2a veranschaulicht schematisch von der Seite eine Vorrichtung 200 zum Bedrucken des Datenträgers 100 in der Variante als Passbuch. Diese Vorrichtung 200 hat einen Druckereingang 202, der in dieser Ausgestaltung dazu eingerichtet und dimensioniert ist, den Datenträger 100 in aufgeklapptem Zustand in einem Schlitten 204 positioniert derart aufzunehmen, dass der zu bedruckende Bereich des Datenträgers 100, also zum Beispiel das Foto-Bildfeld 110, das Datenfeld 120 und der Informationsflächenbereich 130 freiliegt. In der vorliegenden Variante ist zusätzlich auch die benachbarte Seite des Passbuches neben der Datenseite freiliegend. Der Falz oder Buchrücken 104 des Passbuches liegt in Richtung des Transports des Passbuches durch die Vorrichtung 200. Des Weiteren hat die (DruckerVorrichtung 200 einen Druckerkopf 206, hier in der Variante eines Tintenstahldrucker-Kopfes, der Behälter oder Tanks 205 mit zwei oder mehr Tinten umfasst. Im vorliegenden Beispiel sind es fünf Behälter für die Tinten "Cyan", "Magenta", "Yellow" und eine Tinte Schwarzanteil "Key" (erste Tinten), sowie eine Ultraviolett-Licht-aktive Tinte (zweite Tinte). Diese Tinten sind in der hier gezeigten Variante alle Ultraviolett-Licht-härtende Tinten.

Der Druckerkopf 206 ist an einer Schiene 208 aufgenommen, um den Druckerkopf 206 mit einem nicht weiter veranschaulichten Antrieb quer zu Förderrichtung F des Schlittens 204 längs des Pfeils Q (siehe Fig. 2b) von einer Seite des Passbuches zur anderen zu bewegen.

Über eine nicht weiter veranschaulichte Steuerung werden die Druckerdüsen des Druckerkopfes 206 so angesteuert, dass die ersten Tinten und die zweite Tinte auf den freiliegenden zu bedruckenden Bereich des Datenträgers 100 gesteuert ausgedruckt werden, um Personalisierungsdaten des Inhabers, (zum Beispiel Geburtsdatum, Geburtsort, Foto des Inhabers, biometrische Daten des Inhabers, sowie Ausstellungsort, -datum und Gültigkeitsdauer des Passbuches) aufzudrucken. Die ersten Tinten, die zweite Tinte und die dritte Tinte können auf der Datenseite 134 und/oder auf der benachbarten Seite 136, aus Papier, ausgedruckt werden.

Um den Datenträger 100 in dem Schlitten 204 von dem Druckereingang 202 in die Region der Vorrichtung 100 zu fördern, wo der Druckerkopf 206 den zu bedruckenden Bereich des Datenträgers 100 zu bedrucken in der Lage ist, hat die Vorrichtung 100 eine Fördereinrichtung 220 in Gestalt mehrerer Förderrollenpaare 220a ... 220h, von denen einige vor der Steuerung veranlasst antreibbar sind. Der Abstand der einzelnen Rollen jedes der Förderrollenpaare 220a ... 220h ist so bestimmt, dass der Schlitten 204 mit dem darin befindlichen Datenträger 100 zwischen ihnen aufgenommen und längs der Förderrichtung F hin und her beweglich ist. Damit ist der Datenträger 100 in dem Schlitten 204 relativ zu dem Druckerkopf 206 zu bewegen. Der Druckerkopf 206 ist in der Lage, auf den zu bedruckenden Bereich des Datenträgers 100 einzuwirken. Alternativ kann der Schlitten 204 auch an wenigstens einer Linearführung angeordnet sein, wobei die Fördereinrichtung 220 einen mit einem Antrieb in Verbindung stehenden Zahnriemen aufweisen kann, welcher um wenigstens eine Antriebsscheibe und eine Umlenkscheibe geführt sein kann.

Dem Druckerkopf 206 nachgeschaltet ist in der Vorrichtung 200 eine von dem Druckerkopf 206 räumlich abgesetzte Aushärtestation 230 vorgesehen. Es ist in einer Variante auch vorgesehen, die Aushärtestation 230 unmittelbar an den Druckerkopf 206 anzuschließen.

Die Steuereinrichtung 300 ist dazu eingerichtet und programmiert, alle oder einige der Rollen der Förderrollenpaare 220a ... 220h der Fördereinrichtung 220 zum Bewegen des Datenträgers 100 in dem Schlitten 204 relativ zu dem Druckerkopf 206 zu veranlassen. So ist der Druckerkopf 206 in der Lage, den zu bedruckenden Bereich des Datenträgers zu bedrucken. Die Steuereinrichtung 300 ist außerdem dazu eingerichtet und programmiert, den Druckerkopf 206 zum Bedrucken des zu bedruckenden Bereiches des Datenträgers 100 mit personenbezogenen Daten unter Verwendung wenigstens einer ersten der Tinten zu veranlassen.

Die Steuereinrichtung 300 ist außerdem dazu eingerichtet und programmiert, wenn der Druckvorgang der personenbezogenen Daten unter Verwendung der ersten Tinten "Cyan", "Magenta", "Yellow" und "Key" abgeschlossen ist, die Fördereinrichtung 220 zum Bewegen des Datenträgers 100 relativ zu der Aushärtestation 230 in einer ersten Richtung (in Fig. 2a, 2b nach rechts) zu veranlassen, so dass die Aushärtestation 230 auf den zu bedruckenden Bereich des Datenträgers 100 einzuwirken in der Lage ist.

Die Aushärtestation 230 umfasst ein Feld mit UV-Lichtquellen 232, in der gezeigten Variante als UV-LEDs. Die Steuereinrichtung 300 ist außerdem dazu eingerichtet und programmiert, wenn sich der Datenträger im Bereich der Aushärtestation 230 befindet, diese zu aktivieren und ein zumindest teilweises Antrocknen der ersten Tinte(n) in dem zu bedruckenden Bereich des Datenträgers 100 zu veranlassen. Dieser Vorgang des Antrocknens der ersten Tinte, abhängig von Tinte und Lack dauert im Bereich von wenigen Millisekunden bis Millisekunden.

Die Steuereinrichtung 300 ist außerdem dazu eingerichtet und programmiert, anschließend an das Austrocknen die Fördereinrichtung 220 zum Bewegen des Datenträgers 100 relativ zu dem Druckerkopf 206 in einer zweiten, zur ersten entgegengesetzten Richtung (in Fig. 2a, 2b nach links) zu veranlassen, so dass der Druckerkopf 206 den zu bedruckenden Bereich des Datenträgers 100 zu bedrucken in der Lage ist.

Die Steuereinrichtung 300 ist außerdem dazu eingerichtet und programmiert, sobald sich der Datenträgers 100 wieder im Zugriff des Druckerkopfes 206 befindet, den Druckerkopf 206 zum Bedrucken des zu bedruckenden Bereiches des Datenträgers 100 unter Verwendung wenigstens einer zweiten der Tinten, hier der Ultraviolett-Licht-aktiven Tinte, zu veranlassen.

Dann erfolgt ein zweiter Druckvorgang mit der Ultraviolett-Licht-aktiven Tinte. Der Aufdruck (Text, Foto, Graphik) unter Verwendung der zweiten Tinte unterscheidet sich meist vom Aufdruck unter Verwendung wenigstens einer ersten der Tinten.

Die Steuereinrichtung 300 ist außerdem dazu eingerichtet und programmiert, sobald der Bedruckungsvorgang mit der Ultraviolett-Licht-aktiven Tinte beendet ist, die Fördereinrichtung 220 zum Austragen des Datenträgers 100 in dem Schlitten 204 aus der Vorrichtung 200 zu veranlassen. Wenn die Fördereinrichtung 220 den Datenträger 100 aus dem Drucker in der ersten Richtung austrägt, passiert der Datenträger 100 die Aushärtestation 230 ebenfalls. Auch hierbei kann ein zumindest teilweises Antrocknen der zweiten Tinte in dem zu bedruckenden Bereich des Datenträgers 100 erfolgen.

Der Schlitten 204 dient dazu, den Datenträger 100 vor oder beim Eintragen des Datenträgers 100 in den Drucker aufzunehmen und in seiner Lage und Ausrichtung zu fixieren. Dazu dient eine Fixiereinrichtung 260 in Gestalt mehrerer Niederhalter 262, die zum gezielten Fixieren und Freigeben des Datenträgers 100 in dem Schlitten 204 vorgesehen sind.

Genauer sind die Niederhalter 262 am inneren Rand des Schlittens 204 angeordnet und legen bei Einfahren des Schlittens 204 unter den Druckerkopf 206 den Datenträger 100 in seiner Lage und Winkel-Ausrichtung fest.

Die Vorrichtung 200 ist überdies mit einer Sensoranordnung 280 aus einer oder mehreren optischen Kameras versehen, die dazu eingerichtet und dimensioniert sind, vor dem Bedrucken, also beim Bestücken und Einfahren des Schlittens 204 mit dem Datenträger 100 und bei dem Bedrucken des zu bedruckenden Bereiches des Datenträgers 100 die Lage des Datenträgers 100 relativ zu dem Druckerkopf 206 zu erfassen und der Steuereinrichtung 300 zu signalisieren. Die genaue Anordnung der Sensoranordnung 280 relativ zu den übrigen Komponenten der Vorrichtung ergibt sich aus den baulichen Gegebenheiten und ist entsprechend festzulegen.

Die Steuereinrichtung 300 ist basierend auf den Sensorsignalen aus der Sensoranordnung 280 des Weiteren dazu eingerichtet und programmiert, die Fördereinrichtung 220 zu veranlassen, in Abhängigkeit von der Lage des Datenträgers 100 in dem Drucker, die Relativposition zwischen dem Druckerkopf 205 und dem Datenträger 100 anzupassen. Dazu werden ggf. die Drehzahl und der Drehwinkel von einzelnen der Förderrollenpaare 220a ... 220h geregelt. Alternativ dazu wird in einer anderen Variante aus einer Bildaufnahme des Datenträgers 100 und dessen Datenseite 134 die Lageinformation, d.h. einen x- und y-Wert von z.B. der Kante des Passes oder einem Bezugspunkt auf der Datenseite 134 erhalten. Hieraus wird durch Bildverarbeitung erkannt, ob/wie weit der Pass fehl-eingeklemmt wurde. Für einen lagerichtigen Druck wird dann das Drucklayout per Bildverarbeitung gedreht und/oder verschoben.

Außerdem werden die Niederhalter 262 am inneren Rand des Schlittens 204 gezielt aktiviert oder deaktiviert um den Datenträger 100 in der gewünschten Ausrichtung und Lage in dem Schlitten 204 zu fixieren, wenn der Datenträger 100 von außerhalb der Vorrichtung 100 in den Schlitten 204 eingebracht wird.

Die Sensoranordnung 280 ist in der gezeigten Variante ein bildgebender Sensor. Es ist aber auch möglich, einen mechanischen, kapazitiven oder sonstigen Sensor zu verwenden. Die Sensoranordnung 280 ist in einer Variante auch dazu eingerichtet und dimensioniert, nach und/oder bei dem Bedrucken des zu bedruckenden Bereiches des Datenträgers 100 die Qualität / Intensität Lagegenauigkeit des Druckbildes mit der ersten und/oder der zweiten der Tinten auf dem zu bedruckenden Bereich des Datenträgers 100 zu erfassen, und ein Maß der Qualität / Intensität Lagegenauigkeit des Drucks der Steuereinrichtung 300 zu signalisieren.

In der Vorrichtung 200 ist die Steuereinrichtung 300 des Weiteren dazu eingerichtet und programmiert, vor dem Austragen des Datenträgers 100 aus der Drucker-(Vorrichtung) 100 die Fördereinrichtung 220 zum Bewegen des Datenträgers 100 relativ zu dem Druckerkopf 206 in einer zweiten, zur ersten entgegengesetzten Richtung zu veranlassen, so dass der Druckerkopf 206 einen zu bedruckenden Bereich des Datenträgers 100 zu bedrucken in der Lage ist.

In der Vorrichtung 200 ist die Steuereinrichtung 300 des Weiteren dazu eingerichtet und programmiert, den Druckerkopf 205 zum Bedrucken des zu bedruckenden Bereiches des Datenträgers 100 mit wenigstens einer dritten der Tinten zu veranlassen. Dabei ist die wenigstens einer der dritten Tinten dazu geeignet und bestimmt, die vorher aufgetragenen ersten und zweiten Tinten zumindest abschnittsweise auf dem zu bedruckenden Bereich des Datenträgers 100 zu versiegeln. Die dritte Tinte kann ein UV-lichthärtender Lack sein.

In der Vorrichtung 200 ist die Steuereinrichtung 300 des Weiteren dazu eingerichtet und programmiert, die Fördereinrichtung 220 zum Bewegen des Datenträgers 100 relativ zu der Aushärtestation 230 in der ersten Richtung zu veranlassen, nachdem der Datenträger 100 mit der wenigstens einen dritten Tinte bedruckt ist. So ist die Aushärtestation 230 in der Lage, auf den zu bedruckenden Bereich des Datenträgers 100 einzuwirken.

In der Vorrichtung 200 ist die Steuereinrichtung 300 des Weiteren dazu eingerichtet und programmiert, anschließend die Aushärtestation 230 zum zumindest teilweisen Antrocknen der wenigstens einen dritten Tinte in dem zu bedruckenden Bereich des Datenträgers 100 in der Aushärtestation 230 zu veranlassen.

In der Vorrichtung 200 ist die Steuereinrichtung 300 des Weiteren dazu eingerichtet und programmiert, die Fixiereinrichtung 260 zum Lösen der Fixierung des Datenträgers 100 in dem Schlitten 204 vor oder nach dem letzten, zumindest teilweises Antrocknen zu veranlassen. Dabei ist in der hier veranschaulichten Variante das Fixieren und das Lösen der Fixierung des Datenträgers 100 in dem Schlitten 204 mit der Bewegung des Schlittens 204 relativ zu dem Drucker durch die Fördereinrichtung 220 zeitlich und räumlich gekoppelt.

In der Vorrichtung 200 ist die Steuereinrichtung 300 des Weiteren dazu eingerichtet und programmiert, die Fördereinrichtung 220 zu veranlassen, in Abhängigkeit von der jeweiligen der zuvor auf den Datenträger 100 gedruckten Tinten entsprechende Verweildauern des Datenträgers 100 in der Aushärtestation 230 für das jeweilige zumindest teilweise Antrocknen der Tinten zu bewirken. Beispielsweise kann die Steuerung 300 derart eingerichtet sein, dass das Aufdrucken der dritten Tinte auf den Datenträger 100 oder das Ausdrucken einer Tinte aus einem zuvor definierten Tank eine längere Verweildauer des Datenträgers 100 in der Aushärtestation 230 bewirkt.

Schließlich ist in der Vorrichtung 200 ist die Steuereinrichtung 300 des Weiteren dazu eingerichtet und programmiert, den Druckerkopf 205 beim Bedrucken des zu bedruckenden Bereiches des Datenträgers 100 und einem neben dem zu bedruckenden Bereich befindlichen Druckfeld, hier auf der benachbarten Seite 136, mit einer der Tinten ortsfest zu halten oder zu repositionieren.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Verfahren zum Bedrucken eines Datenträgers (100) mit den Schritten:
- Eintragen des Datenträgers mit freiliegendem zu bedruckendem Bereich (110, 120, 130) in einen Drucker (200), wobei dem Drucker ein Druckerkopf (206) mit zwei oder mehr auf den Datenträger zu druckenden Tinten, und eine von dem Druckerkopf räumlich abgesetzte Aushärtestation (230) zugeordnet ist;
- Bewegen des Datenträgers relativ zu dem Druckerkopf, so dass der Druckerkopf einen zu bedruckenden Bereich des Datenträgers zu bedrucken in der Lage ist;
- Erfassen einer Bildaufnahme des Datenträgers (100) mit dem freiliegendem zu bedruckendem Bereich (110, 120, 130) mit einer Sensoranordnung (280) aus einer oder mehreren optischen Kameras;
- Ermitteln, basierend auf der erfassten Bildaufnahme, einer Lageinformation des Datenträgers (100) mit einer Steuereinrichtung (300);
- Verschieben und/oder Drehen eines Drucklayouts für den zu freiliegendem zu bedruckendem Bereich (110, 120, 130) mittels eines Bildverarbeitungsverfahrens durch die Steuereinrichtung (300);
- Bedrucken des zu bedruckenden Bereiches des Datenträgers mit personenbezogenen Daten unter Verwendung wenigstens einer ersten der Tinten;
- Bewegen des Datenträgers relativ zu der Aushärtestation in einer ersten Richtung (F), nachdem der Datenträger mit der wenigstens einen ersten Tinte bedruckt ist, so dass die Aushärtestation auf den zu bedruckenden Bereich des Datenträgers einzuwirken in der Lage ist;
- zumindest teilweises Antrocknen der wenigstens einen ersten Tinte in dem zu bedrucken-den Bereich des Datenträgers (100) in der Aushärtestation (230);
- Bewegen des Datenträgers (100) relativ zu dem Druckerkopf (206) in einer zweiten, zur ersten entgegengesetzten Richtung, so dass der Druckerkopf (206) einen zu bedruckenden Bereich des Datenträgers (100) zu bedrucken in der Lage ist;
- Bedrucken des zu bedruckenden Bereiches des Datenträgers (100) unter Verwendung wenigstens einer zweiten der Tinten, wobei sich der Aufdruck unter Verwendung wenigstens einer zweiten der Tinten vom Aufdruck unter Verwendung wenigstens einer ersten der Tinten unterscheidet;
- Austragen des Datenträgers aus dem Drucker.

2. Verfahren zum Bedrucken eines Datenträgers (100) nach Anspruch 1, wobei beim Austragen des Datenträgers der Schritt ausgeführt wird:
- Transportieren des Datenträgers aus dem Drucker in der ersten Richtung, wobei der Datenträger die Aushärtestation passiert und dabei ein zumindest teilweises Antrocknen der wenigstens einen zweiten Tinte in dem zu bedruckenden Bereich des Datenträgers in der Aushärtestation erfolgt.

3. Verfahren zum Bedrucken eines Datenträgers (100) nach Anspruch 1 oder 2, wobei vor oder beim Eintragen des Datenträgers in den Drucker die Schritte ausgeführt werden:
- Aufnehmen des Datenträgers in einem Schlitten (204), und
- Fixieren des Datenträgers in dem Schlitten (204) in einer vorbestimmten Lage.

4. Verfahren zum Bedrucken eines Datenträgers (100) nach einem der Ansprüche 1 bis 3, wobei vor und/oder bei dem Bedrucken des zu bedruckenden Bereiches des Datenträgers mit wenigstens der ersten und/oder der zweiten der Tinten die Schritte ausgeführt werden:
- Erfassen der Lage des Datenträgers in dem Drucker, und
- Anpassen, in Abhängigkeit von der Lage des Datenträgers in dem Drucker, einer Relativ-position zwischen dem Druckerkopf und dem Datenträger.

5. Verfahren zum Bedrucken eines Datenträgers (100) nach einem der Ansprüche 1 bis 4, wobei nach und/oder bei dem Bedrucken des zu bedruckenden Bereiches des Datenträgers die Schritte ausgeführt werden:
- Erfassen der Qualität und/oder Intensität und/oder Lagegenauigkeit des Drucks mit wenigstens der ersten und/oder der zweiten der Tinten auf dem zu bedruckenden Bereich des Datenträgers in dem Drucker; und
- Ausgeben eines Maßes der Qualität und/oder Intensität und/oder Lagegenauigkeit des Drucks.

6. Verfahren zum Bedrucken eines Datenträgers (100) nach einem der Ansprüche 1 bis 5, wobei als
- die wenigstens erste Tinte drei Tinten mit den Farbbestandteilen "Cyan", "Magenta", "Yellow" und eine Tinte Schwarzanteil "Key" verwendet werden, wobei diese Tinten Ultraviolett-Licht-härtende Tinten sind; und/oder als
- die wenigstens zweite Tinte eine Ultraviolett-Licht-aktive Tinte und/oder eine Ultraviolett-Licht-härtende Tinte verwendet wird, wobei diese wenigstens zweite Tinte als Ultraviolett-Licht-aktive Tinte bei Tageslicht zumindest nahezu unsichtbar ist, und unter ultraviolettem Licht mit etwa 254 bis 370 Nanometer Wellenlänge fluoresziert.

7. Verfahren zum Bedrucken eines Datenträgers (100) nach einem der Ansprüche 2 bis 6, wobei vor dem Austragen des Datenträgers aus dem Drucker die Schritte ausgeführt werden:
- Bewegen des Datenträgers, nach dem zumindest teilweise Antrocknen der wenigstens einen zweiten Tinte, relativ zu dem Druckerkopf in der zweiten, zur ersten entgegengesetzten Richtung, so dass der Druckerkopf einen zu bedruckenden Bereich des Datenträgers zu bedrucken in der Lage ist;
- Bedrucken des zu bedruckenden Bereiches des Datenträgers mit wenigstens einer dritten der Tinten; wobei die wenigstens einer der dritten Tinten die vorher aufgetragenen ersten und zweiten Tinten zumindest abschnittsweise versiegelt;
- Bewegen des Datenträgers relativ zu der Aushärtestation in der ersten Richtung, nachdem der Datenträger mit der wenigstens einen dritten Tinte bedruckt ist, so dass die Aushärte-station auf den bedruckten Bereich des Datenträgers einzuwirken in der Lage ist;
- zumindest teilweises Antrocknen der wenigstens einen dritten Tinte in dem zu bedrucken-den Bereich des Datenträgers in der Aushärtestation.

8. Verfahren zum Bedrucken eines Datenträgers (100) nach einem der Ansprüche 3 bis 7, wobei wenigstens einer der Schritte ausgeführt wird:
- Lösen der Fixierung des Datenträgers in dem Schlitten vor oder nach dem letzten, zumindest teilweisen Antrocknen, wobei das Fixieren und das Lösen der Fixierung des Datenträgers in dem Schlitten mit der Bewegung des Schlittens relativ zu dem Drucker gekoppelt ist;
- Festlegen von der jeweiligen der Tinten abhängigen Verweildauern des Datenträgers in der Aushärtestation für das jeweilige zumindest teilweise Antrocknen der Tinten;
- Ortsfest-Halten oder Repositionieren des Druckerkopfes beim Bedrucken des zu bedrucken-den Bereiches des Datenträgers und/oder einem neben dem zu bedruckenden Bereich befindlichen Druckfeld mit einer der Tinten.

9. Eine Vorrichtung (200) zum Bedrucken eines Datenträgers (100) mit:
- einem Druckereingang (202), der dazu eingerichtet und dimensioniert ist, einen Datenträger mit freiliegendem zu bedruckendem Bereich (110, 120, 130) aufzunehmen;
- einem Druckerkopf (206), der dazu eingerichtet ist, zwei oder mehr zu druckende Tinten auf den freiliegenden zu bedruckenden Bereich des Datenträgers gesteuert auszudrucken;
- eine Sensoranordnung (280) aus einer oder mehreren optischen Kameras, die dazu eingerichtet ist, eine Bildaufnahme des Datenträgers mit dem freiliegendem zu bedruckendem Bereich (110, 120, 130) zu erfassen;
- einer Aushärtestation (230), die von dem Druckerkopf räumlich abgesetzt ist;
- einer Fördereinrichtung (220), die dazu eingerichtet und dimensioniert ist, den Datenträger, den Druckerkopf und die Aushärtestation relativ zueinander zu bewegen, so dass der Druckerkopf den zu bedruckenden Bereich des Datenträgers zu bedrucken in der Lage ist, und die Aushärtestation auf den bedruckten Bereich des Datenträgers einzuwirken in der Lage ist;
- einer Steuereinrichtung (300), die Signale von der Sensoranordnung (280) empfängt und die dazu eingerichtet und programmiert ist,
- die Fördereinrichtung zum Bewegen des Datenträgers relativ zu dem Druckerkopf zu veranlassen, so dass der Druckerkopf den zu bedruckenden Bereich des Datenträgers zu bedrucken in der Lage ist;
- den Druckerkopf zum Bedrucken des zu bedruckenden Bereiches des Datenträgers mit personenbezogenen Daten unter Verwendung wenigstens einer ersten der Tinten zu veranlassen;
- die Fördereinrichtung zum Bewegen des Datenträgers relativ zu der Aushärtestation in einer ersten Richtung zu veranlassen, nachdem der Datenträger mit der wenigstens einen ersten Tinte bedruckt ist, so dass die Aushärtestation auf den zu bedruckenden Bereich des Datenträgers einzuwirken in der Lage ist;
- die Aushärtestation zum zumindest teilweisen Antrocknen der wenigstens einen ersten Tinte in dem zu bedruckenden Bereich des Datenträgers zu veranlassen;
- die Fördereinrichtung zum Bewegen des Datenträgers relativ zu dem Druckerkopf in einer zweiten, zur ersten entgegengesetzten Richtung zu veranlassen, so dass der Druckerkopf den zu bedruckenden Bereich des Datenträgers zu bedrucken in der Lage ist;
- den Druckerkopf zum Bedrucken des zu bedruckenden Bereiches des Datenträgers unter Verwendung wenigstens einer zweiten der Tinten zu veranlassen, wobei sich der Aufdruck unter Verwendung wenigstens einer zweiten der Tinten vom Aufdruck unter Verwendung wenigstens einer ersten der Tinten unterscheidet; und
- die Fördereinrichtung zum Austragen des Datenträgers aus der Vorrichtung (200) zu veranlassen;
wobei die Vorrichtung (200) **dadurch gekennzeichnet ist, dass** die Steuereinrichtung (300) weiter die dazu eingerichtet und programmiert ist,
- basierend auf der mit der Sensoranordnung (280) erfassten Bildaufnahme eine Lageinformation des Datenträgers zu ermitteln; und
- ein Drucklayout für den zu freiliegendem zu bedruckendem Bereich (110, 120, 130) mittels eines Bildverarbeitungsverfahrens zu verschieben und/oder zu drehen.

10. Die Vorrichtung (200) zum Bedrucken eines Datenträgers (100) nach Anspruch 9, bei der die Steuereinrichtung (300) dazu eingerichtet und programmiert ist,
- die Fördereinrichtung zum Transportieren des Datenträgers aus der Vorrichtung in der ersten Richtung zu veranlassen, wobei der Datenträger die Aushärtestation passiert und dabei ein zumindest teilweises Antrocknen der wenigstens einen zweiten Tinte in dem zu bedruckenden Bereich des Datenträgers in der Aushärtestation erfolgt.

11. Die Vorrichtung (200) zum Bedrucken eines Datenträgers (100) nach Anspruch 9 oder 10, mit
- einem Schlitten (204), der zum Aufnehmen des Datenträgers vor oder beim Eintragen des Datenträgers in die Vorrichtung eingerichtet und dimensioniert ist; und/oder
- einer Fixiereinrichtung (262), die zum Fixieren des Datenträgers in dem Schlitten in einer vorbestimmten Lage eingerichtet und dimensioniert ist.

12. Die Vorrichtung (200) zum Bedrucken eines Datenträgers (100) nach einem der Ansprüche 9 bis 11, mit
- einem Sensor (280), der bildgebend ist und der dazu eingerichtet und dimensioniert ist, nach und/oder bei dem Bedrucken des zu bedruckenden Bereiches des Datenträgers die Qualität und/oder Intensität und/oder Lagegenauigkeit des Drucks mit wenigstens der ersten und/oder der zweiten der Tinten auf dem zu bedruckenden Bereich des Datenträgers zu erfassen, und ein Maß der Qualität und/oder Intensität und/oder Lagegenauigkeit des Drucks der Steuereinrichtung zu signalisieren.

13. Die Vorrichtung (200) zum Bedrucken eines Datenträgers (100) nach einem der Ansprüche 9 bis 12, wobei
- der Druckerkopf (204) als wenigstens erste Tinte drei Tinten in getrennten Abteilen mit den Farbbestandteilen "Cyan", "Magenta", "Yellow" und eine Tinte Schwarzanteil "Key" enthält, wobei diese Tinten Ultraviolett-Licht-härtende Tinten sind; und als die wenigstens zweite Tinte eine Ultraviolett-Licht-aktive Tinte und/oder eine Ultraviolett-Licht-härtende Tinte in einem getrennten Abteil enthält, wobei diese wenigstens zweite Tinte als Ultraviolett-Licht-aktive Tinte bei Tageslicht zumindest nahezu unsichtbar ist, und unter ultra-violettem Licht mit etwa 254 bis 370 Nanometer Wellenlänge fluoresziert.

14. Die Vorrichtung (200) zum Bedrucken eines Datenträgers (100) nach einem der Ansprüche 10 bis 13, bei der die Steuereinrichtung (300) dazu eingerichtet und programmiert ist, vor dem Austragen des Datenträgers aus der Vorrichtung
- die Fördereinrichtung, nach dem zumindest teilweise Antrocknen der wenigstens einen zweiten Tinte, zum Bewegen des Datenträgers relativ zu dem Druckerkopf in der zweiten, zur ersten entgegengesetzten Richtung zu veranlassen, so dass der Druckerkopf einen zu bedruckenden Bereich des Datenträgers zu bedrucken in der Lage ist;
- den Druckerkopf zum Bedrucken des zu bedruckenden Bereiches des Datenträgers mit wenigstens einer dritten der Tinten zu veranlassen; wobei die wenigstens eine der dritten Tinten die vorher aufgetragenen ersten und zweiten Tinten zumindest abschnittsweise versiegelt;
- die Fördereinrichtung zum Bewegen des Datenträgers relativ zu der Aushärtestation in der ersten Richtung zu veranlassen, nachdem der Datenträger mit der wenigstens einen dritten Tinte bedruckt ist, so dass die Aushärtestation auf den zu bedruckenden Bereich des Datenträgers einzuwirken in der Lage ist;
- die Aushärtestation zum zumindest teilweisen Antrocknen der wenigstens einen dritten Tinte in dem zu bedruckenden Bereich des Datenträgers in der Aushärtestation zu veranlassen.

15. Die Vorrichtung (200) zum Bedrucken eines Datenträgers (100) nach einem der Ansprüche 11 bis 14, bei der die Steuereinrichtung (300) dazu eingerichtet und programmiert ist,
- die Fixiereinrichtung (262) zum Lösen der Fixierung des Datenträgers in dem Schlitten vor oder nach dem letzten, zumindest teilweises Antrocknen zu veranlassen, wobei das Fixieren und das Lösen der Fixierung des Datenträgers in dem Schlitten mit der Bewegung des Schlittens relativ zu der Vorrichtung durch die Fördereinrichtung gekoppelt ist;
- die Fördereinrichtung (220) zu veranlassen, in Abhängigkeit von der jeweiligen der Tinten die entsprechende Verweildauer des Datenträgers in der Aushärtestation für das jeweilige zumindest teilweise Antrocknen der Tinten zu bewirken;
- den Druckerkopf (206) beim Bedrucken des zu bedruckenden Bereiches des Datenträgers und/ oder einem neben dem zu bedruckenden Bereich befindlichen Druckfeld mit einer der Tinten ortsfest zu halten oder zu repositionieren.

## Claims

1. Method for imprinting a data carrier (100) comprising the steps:
- introducing the data carrier, with an area (110, 120, 130) to be imprinted exposed, into a printer (200), wherein assigned to the printer is a printing head (206) with two or more inks to be printed onto the data carrier, and a curing station (230) spatially remote from the printing head;
- moving the data carrier relative to the printing head, so that the printing head is able to imprint an area of the data carrier to be imprinted;
- capturing an image of the data carrier (100) with the area (110, 120, 130) to be imprinted exposed with a sensor arrangement (280) comprising one or more optical cameras;
- determining, based on the captured image, position information of the data carrier (100) with a control device (300);
- shifting and/or rotating a print layout for the area (110, 120, 130) to be imprinted exposed by the control device (300) by means of an image processing method;
- imprinting of the area of the data carrier to be imprinted with personal data using at least a first of the inks;
- moving the data carrier relative to the curing station in a first direction (F) after the data carrier has been imprinted with the at least one first ink, so that the curing station is able to act upon the area of the data carrier to be imprinted;
- at least partial surface drying of the at least one first ink in the area of the data carrier (100) to be imprinted in the curing station (230);
- moving the data carrier (100) relative to the printing head (206) in a second direction opposite to the first, so that the printing head (206) is able to imprint an area of the data carrier (100) to be imprinted;
- imprinting of the area of the data carrier (100) to be imprinted using at least a second of the inks, wherein the imprint using at least a second of the inks differs from the imprint using at least a first of the inks;
- removing the data carrier from the printer.

2. Method for imprinting a data carrier (100) according to claim 1, wherein upon removing the data carrier, the step is carried out:
- transporting the data carrier from the printer in the first direction, wherein the data carrier passes the curing station and thereby at least partial surface drying of the at least one second ink in the area of the data carrier to be imprinted takes place in the curing station.

3. Method for imprinting a data carrier (100) according to claim 1 or 2, wherein before or during introduction of the data carrier into the printer, the steps are carried out:
- receiving the data carrier in a carriage (204), and
- fixing the data carrier in the carriage (204) in a predetermined position.

4. Method for imprinting a data carrier (100) according to any one of claims 1 to 3, wherein before and/or during imprinting of the area of the data carrier to be imprinted with at least the first and/or the second of the inks, the steps are carried out:
- detecting the position of the data carrier in the printer, and
- depending on the position of the data carrier in the printer, adjusting a relative position between the printing head and the data carrier.

5. Method for imprinting a data carrier (100) according to any one of claims 1 to 4, wherein after and/or during imprinting of the area of the data carrier to be imprinted, the steps are carried out:
- detecting the quality and/or intensity and/or positional accuracy of the imprint with at least the first and/or the second of the inks on the area of the data carrier to be imprinted in the printer; and
- outputting a measure of the quality and/or intensity and/or positional accuracy of the imprint.

6. Method for imprinting a data carrier (100) according to any one of claims 1 to 5, wherein as
- the at least first ink, three inks with the colour components "Cyan", "Magenta", "Yellow" and an ink black component "Key" are used, wherein these inks are ultraviolet-light-curable inks; and/or as
- the at least second ink, an ultraviolet-light-active ink and/or an ultraviolet-light-curable ink is used, wherein this at least second ink as an ultraviolet-light-active ink is at least virtually invisible in daylight, and fluoresces under ultraviolet light with an approximately 254-370 nanometre wavelength.

7. Method for imprinting a data carrier (100) according to any one of claims 2 to 6, wherein before removing the data carrier from the printer, the steps are carried out:
- moving the data carrier, after the at least partial surface drying of the at least one, second ink, relative to the printing head in the second direction opposite to the first, so that the printing head is able to imprint an area of the data carrier to be imprinted;
- imprinting the area of the data carrier to be imprinted with at least a third of the inks; wherein the at least one of the third inks seals the previously applied first and second inks, at least in sections;
- moving the data carrier relative to the curing station in the first direction after the data carrier has been imprinted with the at least one, third ink, so that the curing station is able to act upon the imprinted area of the data carrier;
- at least partial surface drying of the at least one, third ink in the area of the data carrier to be imprinted in the curing station.

8. Method for imprinting a data carrier (100) according to any one of claims 3 to 7, wherein at least one of the steps is carried out:
- releasing the fixing of the data carrier in the carriage before or after the last, at least partial surface drying, wherein the fixing and the release of the fixing of the data carrier in the carriage is coupled to the movement of the carriage relative to the printer;
- determining the respective dwell times, dependent on the inks, of the data carrier in the curing station for the respective at least partial surface drying of the inks;
- holding stationary or repositioning the printing head during imprinting of the area of the data carrier to be imprinted and/or a print field located next to the area to be imprinted with one of the inks.

9. An apparatus (200) for imprinting a data carrier (100) with:
- a printer input (202), which is adapted and dimensioned to receive a data carrier with an exposed area (110, 120, 130) to be imprinted;
- a printing head (206), which is adapted to imprint in a controlled manner two or more inks to be printed onto the exposed area of the data carrier to be imprinted;
- a sensor arrangement (280) comprising one or more optical cameras, which is adapted to capture an image of the data carrier with the area (110, 120, 130) to be imprinted exposed;
- a curing station (230), which is spatially remote from the printing head;
- a conveyor device (220), which is adapted and dimensioned to move the data carrier, the printing head and the curing station relative to one another so that the printing head is able to imprint the area of the data carrier to be imprinted, and the curing station is able to act upon the imprinted area of the data carrier;
- a control device (300), which receives signals from the sensor arrangement (280) and which is adapted and programmed
- to cause the conveyor device to move the data carrier relative to the printing head, so that the printing head is able to imprint the area of the data carrier to be imprinted;
- to cause the printing head to imprint the area of the data carrier to be imprinted with personal data using at least a first of the inks;
- to cause the conveyor device to move the data carrier relative to the curing station in a first direction after the data carrier has been imprinted using the at least one first ink, so that the curing station is able to act upon the area of the data carrier to be imprinted;
- to cause the curing station to at least partially surface dry the at least one first ink in the area of the data carrier to be imprinted;
- to cause the conveyor device to move the data carrier relative to the printing head in a second direction opposite to the first, so that the printing head is able to imprint the area of the data carrier to be imprinted;
- to cause the printing head to imprint the area of the data carrier to be imprinted using at least a second of the inks, wherein the imprint using at least a second of the inks differs from the imprint using at least a first of the inks; and
- to cause the conveyor device to remove the data carrier from the device (200); wherein the apparatus (200) is **characterized in that**
the control device (300) is further configured and programmed to
- determine position information of the data carrier based on the image captured by the sensor arrangement (280); and
- to shift and/or rotate a print layout for the area (110, 120, 130) to be imprinted by means of an image processing method.

10. The apparatus (200) for imprinting a data carrier (100) according to claim 9, in which the control device (300) is adapted and programmed
- to cause the conveyor device to transport the data carrier from the device in the first direction, wherein the data carrier passes the curing station and thereby at least partial surface drying of the at least one second ink in the area of the data carrier to be imprinted takes place in the curing station.

11. The apparatus (200) for imprinting a data carrier (100) according to claim 9 or 10, with
- a carriage (204), which is adapted and dimensioned to receive the data carrier before or during introduction of the data carrier into the device; and/or
- a fixing device (262), which is adapted and dimensioned to fix the data carrier in the carriage in a predetermined position.

12. The apparatus (200) for imprinting a data carrier (100) according to any one of claims 9 to 11, with
- a sensor (280), which is imaging and is adapted and dimensioned to detect, after and/or during imprinting of the area of the data carrier to be imprinted, the quality and/or intensity and/or positional accuracy of the print using at least the first and/or the second of the inks on the area of the data carrier to be imprinted, and to signal a measure of the quality and/or intensity and/or positional accuracy of the print to the control device.

13. The apparatus (200) for imprinting a data carrier (100) according to any one of claims 9 to 12, wherein
- the printing head (204) contains three inks in separate compartments with the colour constituents "Cyan", "Magenta", "Yellow" and an ink black component "Key" as at least a first ink, wherein these inks are ultraviolet-light-curable inks; and contains an ultraviolet-light-active ink and/or an ultraviolet-light-curable ink in a separate compartment as the at least second ink, wherein this at least second ink as an ultraviolet-light-active ink is at least virtually invisible in daylight, and fluoresces under ultraviolet light with an approximately 254 to 370 nanometre wavelength.

14. The apparatus (200) for imprinting a data carrier (100) according to any one of claims 10 to 13, in which the control device (300) is adapted and programmed, before removal of the data carrier from the printer,
- to cause the conveyor device, after the at least partial surface drying of the at least one, second ink, to move the data carrier relative to the printing head in a second direction opposite to the first, so that the printing head is able to imprint an area of the data carrier to be imprinted;
- to cause the printing head to imprint the area of the data carrier to be imprinted with at least a third of the inks; wherein the at least one of the third inks seals the previously applied first and second inks, at least in sections;
- to cause the conveyor device to move the data carrier relative to the curing station in the first direction after the data carrier has been imprinted with the at least one, third ink, so that the curing station is able to act upon the area of the data carrier to be imprinted;
- to cause the curing station to at least partially surface dry the at least one, third ink in the area of the data carrier to be imprinted in the curing station.

15. The apparatus (200) for imprinting a data carrier (100) according to any one of claims 11 to 14, in which the control device (300) is adapted and programmed
- to cause the fixing device (262) to release the fixing of the data carrier in the carriage before or after the last, at least partial surface drying, wherein the fixing and the release of the fixing of the data carrier in the carriage is coupled to the movement of the carriage relative to the device by the conveyor device;
- to cause the conveyor device (220) to bring about, depending on the respective of the inks, the corresponding dwell time of the data carrier in the curing station for the respective at least partial surface drying of the inks;
- to hold stationary or reposition the printing head (206) during imprinting of the area of the data carrier to be imprinted and/or a print field located next to the area to be imprinted with one of the inks.

## Revendications

1. Procédé d'impression d'un support de données (100) comprenant les étapes suivantes:
- introduire du support de données avec la zone exposée à imprimer (110, 120, 130) dans une imprimante (200), une tête d'impression (206) avec deux ou plusieurs encres à imprimer sur le support de données étant associée à l'imprimante, et une station de durcissement (230) séparée spatialement de la tête d'impression;
- déplacer le support de données par rapport à la tête d'impression de sorte que la tête d'impression soit capable d'imprimer sur une zone du support de données à imprimer;
- capturer une prise de vue du support de données (100) avec la zone exposée à imprimer (110, 120, 130) avec un agencement de capteurs (280) constitué d'une ou de plusieurs caméras optiques;
- déterminer, sur la base de l'enregistrement d'image saisi, une information de position du support de données (100) avec un dispositif de commande (300);
- déplacer et/ou la rotation d'une mise en page d'impression pour la zone à imprimer (110, 120, 130) à exposer au moyen d'un procédé de traitement d'image par le dispositif de commande (300);
- imprimer de données personnelles sur la zone à imprimer du support de données en utilisant au moins une première des encres;
- déplacer du support de données par rapport à la station de durcissement dans une première direction (F) après que le support de données a été imprimé avec la au moins une première encre, de sorte que la station de durcissement est capable d'agir sur la zone à imprimer du support de données;
- sécher au moins partiel de la au moins une première encre dans la zone à imprimer du support de données (100) dans la station de durcissement (230);
- déplacer le support de données (100) par rapport à la tête d'impression (206) dans une seconde direction opposée à la première, de sorte que la tête d'impression (206) est capable d'imprimer une zone à imprimer du support de données (100);
- imprimer la zone à imprimer du support de données (100) en utilisant au moins une deuxième des encres, imprimer utilisant au moins une deuxième des encres étant différente de l'impression en utilisant au moins une première des encres;
- fournir du support de données de l'imprimante.

2. Procédé d'impression d'un support de données (100) selon la revendication 1, dans lequel, lors de l'évacuation du support de données, l'étape est exécutée:
- transporter le support de données hors de l'imprimante dans la première direction, le support de données passant par la station de durcissement et un séchage au moins partiel de la au moins une deuxième encre ayant lieu dans la zone à imprimer du support de données dans la station de durcissement.

3. Procédé d'impression d'un support de données (100) selon la revendication 1 ou 2, dans lequel, avant ou lors de l'introduction du support de données dans l'imprimante, les étapes sont exécutées:
- recevoir du support de données dans un chariot (204), et
- fixer le support de données dans le chariot (204) dans une position prédéterminée.

4. Procédé d'impression d'un support de données (100) selon l'une des revendications 1 à 3, les étapes étant exécutées avant et/ou lors de l'impression de la zone à imprimer du support de données avec au moins la première et/ou la deuxième des encres:
- détecter la position du support de données dans l'imprimante, et
- ajuster, en fonction de la position du support de données dans l'imprimante, une position relative entre la tête d'impression et le support de données.

5. Procédé d'impression d'un support de données (100) selon l'une des revendications 1 à 4, dans lequel les étapes sont exécutées après et/ou lors de l'impression de la zone à imprimer du support de données:
- détecter la qualité et/ou l'intensité et/ou la précision de position de l'impression avec au moins la première et/ou la deuxième des encres sur la zone à imprimer du support de données dans l'imprimante; et
- délivrer une mesure de la qualité et/ou de l'intensité et/ou de la précision de position de l'impression.

6. Procédé d'impression d'un support de données (100) selon l'une des revendications 1 à 5, dans lequel, en tant que
- les au moins premières encres sont trois encres ayant les composantes de couleur "cyan", "magenta", "jaune" et une encre composante de noir "key", ces encres étant des encres durcissant à la lumière ultraviolette ; et/ou en tant que
- ladite au moins une deuxième encre est une encre active à la lumière ultraviolette et/ou une encre durcissant à la lumière ultraviolette, ladite au moins une deuxième encre étant au moins presque invisible à la lumière du jour en tant qu'encre active à la lumière ultraviolette, et étant fluorescente sous une lumière ultraviolette d'environ 254 à 370 nanomètres de longueur d'onde.

7. Procédé d'impression d'un support de données (100) selon l'une des revendications 2 à 6, dans lequel, avant de décharger le support de données de l'imprimante, on effectue les étapes suivantes:
- déplacer le support de données, après le séchage au moins partiel de la au moins une deuxième encre, par rapport à la tête d'impression dans la deuxième direction opposée à la première, de sorte que la tête d'impression est capable d'imprimer une zone à imprimer du support de données;
- imprimer la zone à imprimer du support de données avec au moins une troisième des encres ; ladite au moins une des troisièmes encres scellant au moins par sections les première et deuxième encres appliquées précédemment;
- déplacer le support de données par rapport à la station de durcissement dans la première direction après que le support de données a été imprimé avec la au moins une troisième encre, de sorte que la station de durcissement est capable d'agir sur la zone imprimée du support de données;
- sécher au moins partiel la au moins une troisième encre dans la zone à imprimer du support de données dans la station de durcissement.

8. Procédé d'impression d'un support de données (100) selon l'une des revendications 3 à 7, dans lequel au moins l'une des étapes est exécutée:
- libérer la fixation du support de données dans le chariot avant ou après le dernier séchage au moins partiel, la fixation et la libération de la fixation du support de données dans le chariot étant couplées au mouvement du chariot par rapport à l'imprimante;
- déterminer de durées de séjour du support de données dans la station de durcissement pour le séchage respectif au moins partiel des encres, en fonction de chacune des encres;
- maintenir en place ou le repositionnement de la tête d'impression lors de l'impression de la zone à imprimer du support de données et/ou d'une zone d'impression se trouvant à côté de la zone à imprimer avec l'une des encres.

9. Un dispositif (200) pour imprimer sur un support de données (100) avec:
- une entrée d'imprimante (202) qui est conçue et dimensionnée pour recevoir un support de données avec une zone exposée à imprimer (110, 120, 130);
- une tête d'impression (206) adaptée pour imprimer de manière contrôlée deux ou plusieurs encres à imprimer sur la zone exposée à imprimer du support de données;
- un agencement de capteurs (280) constitué d'une ou de plusieurs caméras optiques, qui est conçu pour saisir une prise de vue du support de données avec la zone exposée à imprimer (110, 120, 130);
- une station de durcissement (230), qui est séparée dans l'espace de la tête d'impression;
- un convoyeur (220) agencé et dimensionné pour déplacer le support de données, la tête d'impression et la station de durcissement les uns par rapport aux autres, de sorte que la tête d'impression est capable d'imprimer la zone du support de données à imprimer et la station de durcissement est capable d'agir sur la zone imprimée du support de données;
- un dispositif de commande (300) qui reçoit des signaux de l'agencement de capteurs (280) et qui est aménagé et programmé à cet effet,
- faire en sorte que le dispositif de transport déplace le support de données par rapport à la tête d'impression de telle sorte que la tête d'impression soit capable d'imprimer la zone du support de données à imprimer;
- faire en sorte que la tête d'impression imprime des données personnelles sur la zone à imprimer du support de données en utilisant au moins une première des encres;
- faire en sorte que le convoyeur déplace le support de données par rapport à la station de durcissement dans une première direction après que le support de données a été imprimé avec la au moins une première encre, de sorte que la station de durcissement est capable d'agir sur la zone à imprimer du support de données;
- provoquer le séchage au moins partiel de la au moins une première encre dans la zone à imprimer du support de données par la station de durcissement;
- faire en sorte que le convoyeur déplace le support de données par rapport à la tête d'impression dans une deuxième direction opposée à la première, de sorte que la tête d'impression soit en mesure d'imprimer la zone du support de données à imprimer;
- faire en sorte que la tête d'impression imprime sur la zone à imprimer du support de données en utilisant au moins une deuxième des encres, l'impression en utilisant au moins une deuxième des encres étant différente de l'impression en utilisant au moins une première des encres; et
- faire en sorte que le dispositif de transport évacue le support de données hors du dispositif (200);
le dispositif (200) étant **caractérisé en ce que** le dispositif de commande (300) en outre qui est aménagé et programmé à cet effet,
- déterminer une information de position du support de données sur la base de l'enregistrement d'image saisi par le dispositif de détection (280); et
- décaler et/ou faire tourner une mise en page d'impression pour la zone à imprimer (110, 120, 130) à exposer au moyen d'un procédé de traitement d'image.

10. Le dispositif (200) d'impression d'un support de données (100) selon la revendication 9, dans lequel le dispositif de commande (300) est conçu et programmé à cet effet,
- faire en sorte que le dispositif de transport transporte le support de données hors du dispositif dans la première direction, le support de données passant par la station de durcissement et un séchage au moins partiel de la au moins une deuxième encre ayant lieu dans la zone à imprimer du support de données dans la station de durcissement.

11. Le dispositif (200) pour l'impression d'un support de données (100) selon la revendication 9 ou 10, avec
- un chariot (204) qui est conçu et dimensionné pour recevoir le support de données avant ou pendant l'introduction du support de données dans le dispositif; et/ou
- un dispositif de fixation (262) qui est conçu et dimensionné pour fixer le support de données dans le chariot dans une position prédéterminée.

12. Le dispositif (200) d'impression d'un support de données (100) selon l'une des revendications 9 à 11, comprenant
- un capteur (280) qui est imageur et qui est conçu et dimensionné pour détecter, après et/ou lors de l'impression de la zone à imprimer du support de données, la qualité et/ou l'intensité et/ou la précision de position de l'impression avec au moins la première et/ou la deuxième des encres sur la zone à imprimer du support de données, et pour signaler une mesure de la qualité et/ou de l'intensité et/ou de la précision de position de l'impression au dispositif de commande.

13. Le dispositif (200) d'impression d'un support de données (100) selon l'une des revendications 9 à 12, dans lequel
- la tête d'impression (204) contient, en tant qu'au moins une première encre, trois encres dans des compartiments séparés ayant les composantes de couleur "cyan", "magenta", "jaune" et une encre à composante noire "key", ces encres étant des encres photodurcissables par les ultraviolets; et en ce que ladite au moins une deuxième encre contient une encre active à la lumière ultraviolette et/ou une encre durcissant à la lumière ultraviolette dans un compartiment séparé, ladite au moins une deuxième encre étant une encre active à la lumière ultraviolette au moins presque invisible à la lumière du jour, et étant fluorescente sous une lumière ultraviolette d'environ 254 à 370 nanomètres de longueur d'onde.

14. Le dispositif (200) d'impression d'un support de données (100) selon l'une des revendications 10 à 13, dans lequel le dispositif de commande (300) est agencé et programmé pour, avant l'évacuation du support de données hors du dispositif
- faire en sorte que le dispositif de transport, après le séchage au moins partiel de la au moins une deuxième encre, déplace le support de données par rapport à la tête d'impression dans la deuxième direction opposée à la première, de sorte que la tête d'impression soit en mesure d'imprimer une zone à imprimer du support de données;
- faire en sorte que la tête d'impression imprime la zone à imprimer du support de données avec au moins une troisième desdites encres ; ladite au moins une desdites troisièmes encres scellant au moins partiellement les première et deuxième encres précédemment appliquées;
- faire en sorte que le convoyeur déplace le support de données par rapport à la station de durcissement dans la première direction après que le support de données a été imprimé avec la au moins une troisième encre, de sorte que la station de durcissement est capable d'agir sur la zone à imprimer du support de données;
- provoquer le séchage au moins partiel de la au moins une troisième encre dans la zone à imprimer du support de données dans la station de durcissement.

15. Le dispositif (200) d'impression d'un support de données (100) selon l'une des revendications 11 à 14, dans lequel le dispositif de commande (300) est agencé et programmé à cet effet,
- faire en sorte que le moyen de fixation (262) libère la fixation du support de données dans le chariot avant ou après le dernier séchage au moins partiel, la fixation et la libération de la fixation du support de données dans le chariot étant couplées au déplacement du chariot par rapport à l'appareil par le moyen de transport;
- faire en sorte que le dispositif de transport (220) provoque, en fonction de l'une respective des encres, le temps de séjour correspondant du support de données dans la station de durcissement pour le séchage respectif au moins partiel des encres;
- de maintenir ou de repositionner la tête d'impression (206) de manière fixe lors de l'impression de la zone à imprimer du support de données et/ou d'une zone d'impression se trouvant à côté de la zone à imprimer avec l'une des encres.
